# EUROPEAN PATENT APPLICATION

(11) **EP 0 858 912 A2**
(43) Date of publication of application: **19.08.1998**
(21) Application number: 98102364.1
(22) Date of filing: 11.02.1998
(51) Int. Cl.: B44C 1/14, B32B 31/00

(54) **Process for film transfer metallization**

(30) Priority: 12.02.1997 US 798015
(71) Applicant: TRW Inc., Redondo Beach, California 90278 (US)
(72) Inventor: Lewis, Richard A., E1 Segundo, CA 90245 (US)
(74) Representative: Schmidt, Steffen J., Dipl.-Ing.

(57) **Abstract**

The present invention relates generally to a process for metallization of composite and non-composite materials. In particular, the present invention relates to a process for film transfer metallization in which a carrier film, preferably comprised of a polymeric material, is coated with a metal layer on one side, deposited onto a substrate such that the metal layer is not in contact with the substrate, transferred directly to a component material, and then cured to consolidate and transfer the metal layer to the component material. The cured carrier film may be removed or stripped from the cured component material as desired. The component material may be a composite material or a non-composite material. With non-composite components, the process includes the step of applying an adhesive layer to the metallized carrier film. Embodiments of the process of the present invention may include the use of a pressure sensitive adhesive, and the steps of embossing or etching the carrier film with patterns, such as holographic patterns, before metallizing the carrier film.

## Description

### BACKGROUND OF THE INVENTION

### Technical Field

The present invention relates generally to a process for metallization of composite and non-composite materials. In particular, the present invention relates to a process for film transfer metallization in which a carrier film is coated with a metal layer, applied to a component material, and then cured to consolidate and transfer the metal layer to the component material. Variations of the process of the present invention may include the use of an adhesive, and embossing or etching the carrier film with patterns, such as holographic patterns, before metallization of the carrier film.

### Discussion of the Related Art

In the fabrication of hardware structural components for spacecraft, such as antennas, booms, struts, and the like, it is standard practice to metallize such components before assembly or integration. Processes for metallization provide the component parts with protective surfaces to ensure good barrier properties against temperature extremes, permeation by moisture, and debris in space. In addition, processes for metallization provide the component parts with electrically conductive surfaces, as well as decorative surfaces. Such metallization processes are also commonly used for component parts of such articles as aircraft, automobiles, trucks, boats, hydrosports vehicle exteriors, farm machinery, building materials, computer housings, electronic housings, furniture, tools, sporting goods, toys, and helmets.

Metal coatings are currently applied to component parts through secondary processes such as sputter deposition, vapor deposition, flame spraying, electroplating, and electroless-plating. However, these processes often require physically moving the component parts to available dedicated facilities for metallization, as well as scheduling or contracting out of the available facilities for such metallization. Typically, the component parts are transported to off-site dedicated facilities which have available machines for metallization, and then the component parts are transported back to the home facility for assembly into an integrated product. This is costly, time consuming, and increases the risk of damage and mishandling of the component parts.

Presently, component parts are often limited in size to the dimensions of available vacuum chambers in sputter and vapor deposition machines and to the dimensions of available plating baths. Known processes require the designing and manufacturing of special fixtures or facilities for size restricted vacuum chambers or plating baths, in order to accommodate the metallization of large component parts, i.e., flight hardware. This is costly and labor intensive.

Further problems with existing processes include temperature limitations of the substrates (vapor deposition), chemical compatibility (electroplating), and uniform coating of complex geometrical parts (sputter deposition). Moreover, known metallization processes require sanding, leveling, and priming of the component parts in order to provide a smooth surface before the metallization process can take place.

In addition, known metallization processes present quality control problems that can affect the resultant coating, such as coating thickness buildup, non-uniform coating, inferior adhesion of the metal coating to the component part, and mishandling of the part after coating. For example, when component parts, such as antennas, are metallized with conventional vapor or sputter deposition processes, the deposited metal hits the curved surface of the antenna at different angles and builds up irregularities and thicknesses across the curved surface of the antenna. To minimize this problem, sophisticated and expensive computerized devices are required to maximize uniform distribution of the metal onto the curved surface. This adds to the cost and complexity of the metallization process and the overall manufacturing process.

In addition to known metallization processes, film transfer metallization processes are known. A transfer metallization process is disclosed in U.S. Patent No. 4,250,209 to de Leeuw et al., in which a thin, coherent metallic stratum is applied onto a major surface of a non-metallic substrate. However, the process is primarily used to metallize paper and requires the use of a release agent.

In addition, a process for preparing a transfer metallization film is disclosed in U.S. Patent No. 4,875,963 to Paschke et al., in which a film web of polypropylene film is subjected, before the first application of a metal layer onto one side of the film web, to a one-sided electric corona discharge on the other side of the film web. However, the process requires the use of added electric corona discharge equipment to apply the metal to the film.

It is therefore desirable to provide a process for film transfer metallization which overcomes the limitations associated with known metallization processes and known film transfer metallization processes.

### SUMMARY OF THE INVENTION

In accordance with the teachings of the present invention, a process for film transfer metallization is disclosed. According to one aspect of the present invention, a process for film transfer metallization is provided which comprises the steps of: providing a carrier film having a first surface side and a second surface side; coating the first surface side of the carrier film with a metal layer; depositing the coated carrier film onto a substrate surface, wherein the second surface side of the carrier film is in contact with the substrate surface, and wherein the metal layer on the first surface side of the carrier film is not in contact with the substrate surface; depositing a component material onto the metal layer on the first surface side of the carrier film to form a multilayer product; curing the multilayer product in a curing apparatus for an effective amount of time and at an effective temperature and at an effective pressure to consolidate the multilayer product and to transfer the metal layer from the carrier film to the component material; and, removing the cured product from the curing apparatus.

The process may further include the step of removing the cured carrier film from the cured component material of the multilayer product. The process may further include the step of subsequently coating the metallized first surface side of the carrier film with an adhesive layer, after the first surface side of the carrier film has been coated with the metal layer. The adhesive layer may be comprised of materials such as film adhesives, laminating adhesives, or liquid resin adhesives. The component material deposited onto the metallized, adhesive coated carrier film is preferably a non-composite material.

The process may further include the step of embossing patterns onto the carrier film or the step of etching patterns into the carrier film, before the step of coating the first surface side of the carrier film with a metal layer. The carrier film may comprise a polymeric material such as polyethylene-terephthalate, fluorinated ethylenepropylene, polytetrafluoroethylene, perfluoroalkoxy, vinylidene fluoride, polyvinyl fluoride, ethylene-chlorotrifluororethylene copolymer, nylon, or other suitable polymeric materials. The substrate may be comprised of materials such as composites or non-composites. The component material may be comprised of composite materials such as thermoplastics, elastomerics, thermosets, or other suitable composites.

Other features and advantages of the present invention will become apparent from the following description of the drawings, detailed description of the invention, and claims, taken in conjunction with the accompanying drawings.

### BRIEF DESCRIPTION OF THE DRAWINGS

Reference is now made to the Detailed Description of the Preferred Embodiments, illustrated in the accompanying drawings, in which:
Figure 1 is a graphic illustration of the steps utilized in practicing the process according to the preferred embodiment of the invention;
Figure 2 is a graphic illustration of the steps utilized in practicing an alternative process for the film transfer metallization; and
Figure 3 is a graphic illustration of the steps utilized in a further alternative to the process illustrated in Figure 1;
Figure 4 is a detailed cross-sectional view of the layers of the film utilized in the process of Figure 1;
Figure 5 is a detailed cross-sectional view of the multilayer product produced in a step of the process of Figure 1;
Figure 6 is a detailed cross-sectional view of the multilayer product produced in a step of the process of Figure 3;
Figure 7 is a graphic illustration of the steps utilized in a further alternative to the process illustrated in Figure 1; and
Figure 8 is a detailed cross-sectional view of the multilayer product produced in a step of the process of Figure 7.

### DETAILED DESCRIPTION OF THE PREFERRED EMBODIMENTS

The following description of the preferred embodiments of the invention are merely exemplary in nature and are in no way intended to limit the invention or its applications or uses.

The film transfer metallization process of the present invention has numerous advantages over known metallization processes and film transfer metallization processes. The present process saves time and is more efficient than known metallization processes because it eliminates the need to move the entire component structure to a dedicated facility to undergo metallization in available vapor or sputter deposition machines or in available plating baths. Instead, it is the carrier film of the present invention that is metallized and processed via sputter deposition, vapor deposition, flame spraying, electroplating, electroless-plating, or another secondary metallization process. By eliminating the need to metallize the component parts at off-site dedicated facilities, the need for special equipment and fixtures to transport and accommodate the component parts in available machines is also eliminated, as well as the need for adverse scheduling or contracting out of available off-site dedicated facilities. Further, by eliminating the need for processing the component parts at off-site dedicated facilities, the present process greatly reduces the risk of damaging and mishandling the component parts at the off-site facilities or while in transit.

In addition, the present process allows for the metal coating of articles that were previously too large to fit into conventional vacuum chambers or plating baths. With the present process, the component parts are metallized as they are molded during the initial manufacturing process and are therefore not limited in size to the dimensions of the available vacuum chambers of sputter or vapor deposition machines, or to the dimensions of available plating baths.

In addition, unlike standard vapor and sputter deposition processes for metallizing component parts, the present process eliminates the need for sanding, leveling, and priming of the surface of the component material prior to depositing the metallized carrier film onto it. With the present invention, in the case of a composite component, the surface of the composite component part does not need to be made initially smooth because the metallic layer bonds to the resin matrix present on the outer layer of the composite component, regardless of whether the surface is rough or smooth.

In addition, the process of the present invention utilizes a metallized carrier film which when applied to the selected component part provides for uniform and equal distribution of the metal onto the surface of the component part. With the metallized film, thickness uniformity is controlled without the necessity of expensive computerized devices to control the distribution of the metal onto the component part. In turn, the present process allows for the uniform metal coating of component parts having complex geometrical shapes because, again, the thickness uniformity of the metal can be controlled when it is transferred to the component part via the carrier film. The present process also achieves superior adhesion of the metal coating to the component part because adhesion is achieved via chemical bonding versus the weaker mechanical bonding present in vapor deposition and electroless-plating processes.

Previously, it has not been obvious to metallize polymeric carrier films having a high degree of releasability because the metal does not adhere or does not adhere to readily to the polymeric release films. However, the present process contemplates the use of a metallized polymeric release film that operates as a release and transfer film rather than as a film that adheres.

In addition, the present process can also be used with commercial metallized films which lowers the cost of manufacturing, allows for large quantities of film having specified dimensions to be ordered at one time, and favorably decreases scheduling spans. The present process can also be used with all types of coatings, including multilayer coatings. The present process allows for multilayer coatings to be applied to the carrier film and then transferred to the problematic substrate. Known processes such as electroless-plating are limited to only certain substrates or materials to which they can be applied. Further, known processes require that each of the single or multilayer metallic coatings be applied via vapor deposition, sputter deposition, or another known metallization process.

In addition, the present process enables the metallization of composites, such as composite hardware, on either the tool side or the bag side, or both sides, of the composite hardware. This eliminates the need for two separate metallization processes because both sides of the composite hardware can be metallized simultaneously without the need for added special equipment. For purposes of this application the term "tool side" means the generally smooth, flat surface side or mold side of the composite hardware, and the term "bag side" means the typically rough, non-controlled outer surface of the composite hardware which is the open side or top side in the mold.

The present process also provides for the use of embossed or etched films, such as holographic or diffraction gradient films. According to the present invention, the transfer of the holographic images with this process produces enhanced optical harmonics in the resultant component when it is metallized, as compared to the original film. The process also enhances the reflectivity of the holographic films when they are transferred to the component structures because of the increased angle of return of light due to natural surface irregularities. In addition, the use of holographic films in the present invention results in the replication of most or all of the diffraction gradient spectra to the processed component material.

The present process may also provide a protective cured carrier film layer on the metallized component part. The cured carrier film layer may be removed from the metallized component part, as desired, or the carrier film may be left on the component part to impart environmental resistance or to provide other protective properties.

Thus, the present invention provides a process for film transfer metallization of composite and non-composite structural components that is superior to known processes in numerous aspects. The present process may be used in industrial and commercial applications for metallization of component parts for a variety of articles including spacecraft, aircraft, automobiles, trucks, boats, hydrosports vehicle exteriors, farm machinery, building materials, computer housings, electronic housings, furniture, tools, sporting goods, toys, novelty items, and helmets.

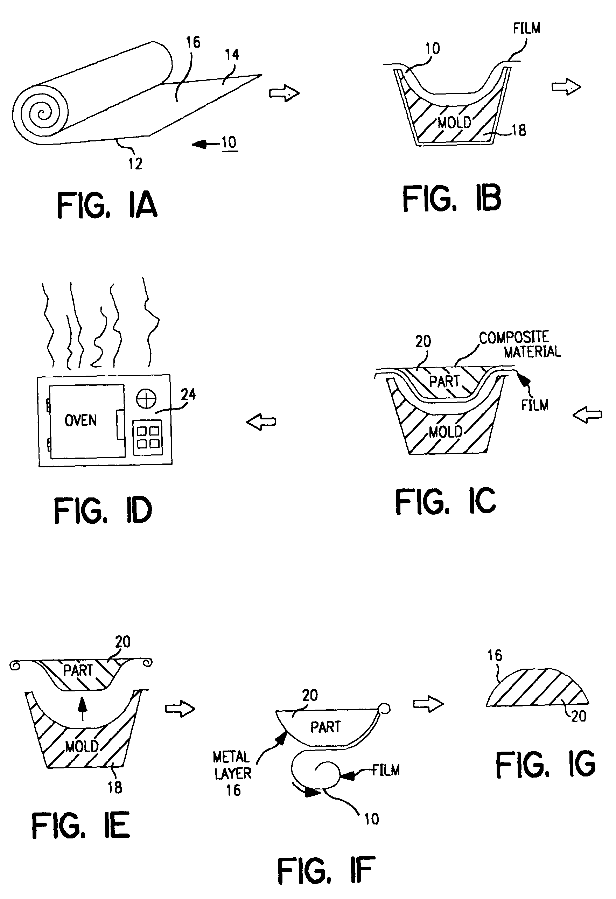

The invention comprises a process for film transfer metallization, and is graphically illustrated in Figure 1. In the development of the process according to one aspect of the present invention, a carrier film 10 is provided having a first surface side 14 and a second surface side 12. Suitable carrier films 10 are thermally stable and heat resistant and have good release properties and low surface energy, in that they will not adhere to other surfaces, will not overly adhere to the metal surface to inhibit its separation, and are self-releasing. Suitable carrier films 10 also exhibit no deterioration when exposed to the material surface they are to be deposited on, have superior purity qualities to produce acceptable metallization, and are sufficiently sturdy to withstand handling and transport. In the present invention, suitable carrier films 10 may be comprised of a polymeric material such as polyethylene-terephthalate (PET), fluorinated ethylenepropylene (FEP), polytetrafluoroethylene (PTFE), perfluoroalkoxy (PFA), vinylidene fluoride (PVF₂), polyvinyl fluoride (PVF), ethylene-chlorotrifluororethylene copolymer (E-CTFE), and nylon. However, the carrier film 10 is not limited to these materials and may be comprised of other suitable polymeric materials, including other suitable fluorocarbons. The preferred carrier film 10 is polytetrafluoroethylene (PTFE). The thickness of the carrier film 10 is selected based on the particular component part that is to be metallized. For purposes of this application, the thickness of the carrier film 10 is typically in the range of about 0.0005 of an inch to about 0.010 of an inch thick.

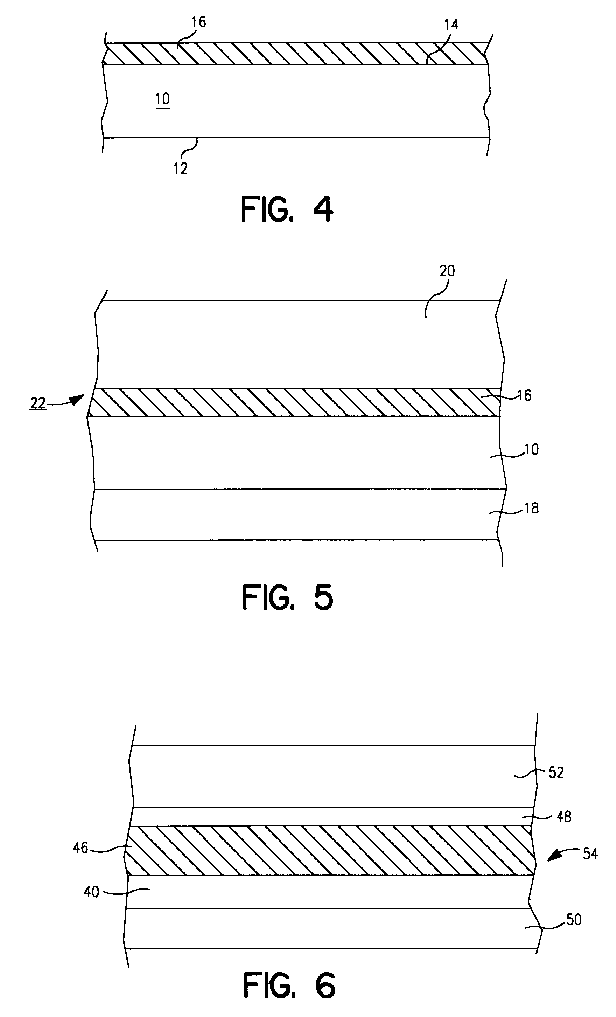

The process further comprises the step of coating, or substantially coating, the first surface side 14 of the carrier film 10 with a metal layer 16 (Figure 4). Any suitable metal may be used to coat, or substantially coat, the carrier film 10. Preferably, the metals that may be used comprise aluminum, copper, silver, and gold. However, other suitable metals may also be used. The coating of the carrier film 10 with the metal layer 16 is typically carried out via a conventional metallization process, such as vapor deposition, sputter deposition, flame spraying, electroplating, or electroless-plating. If vapor or sputter deposition machines are used, the vapor or sputter deposition machines must have vacuum systems that are compatible with the chemical properties of the selected carrier film 10. The vacuum system must be capable of coating the selected carrier film 10 without damage, contamination, or inhibition of the coating growth. Similarly, the selected carrier film 10 should not contaminate or inhibit the vacuum system's proper operation. Typically, metal coatings 16 including copper, gold, aluminum, and silver, that are used for radio frequency (RF) conductivity, thermal conductivity, and thermal reflectivity work well with vapor deposition processes. The thickness of the metal coating 16 on the carrier film 10 is typically in the range of about 1000 Angstroms to about 5000 Angstroms. The preferred thickness of the metal coating 16 is about 2000 Angstroms, depending on the desired reflectivity and electrical requirements.

It is further contemplated by the present invention that metallized commercial carrier films may be used, such as those films manufactured by Sheldahl Inc., of Northfield, Minnesota. The preferred metallized commercial carrier films used with the present process comprise polytetrafluoroethylene coated with aluminum, and are manufactured by Sheldahl, Inc. (Product Number LNB 908-79-1 & Product Number LNB 908-79-2). The use of metallized commercial films may reduce the time and cost of the process of the present invention, as well as allow for the ordering at one time of large quantities of the desired carrier film 10 having the specified dimensions of the component parts.

Once the first surface side 14 of the carrier film 10 is sufficiently and substantially coated with a layer of metal 16, the coated carrier film 10 is removed from the deposition machine or other coating apparatus, and deposited onto a substrate surface 18, such as a mold 18. The coated carrier film 10 is deposited onto the substrate surface 18 in a manner such that the second surface side or uncoated side 12 of the carrier film 10 is in contact with the substrate surface 18, and the metal layer coating 16 on the first surface side 14 of the carrier film 10 is exposed and not in contact with the substrate surface 18. The substrate 18 may be comprised of composite materials consisting of a plastic matrix reinforced by fibers such as glass, graphite, and the like. The substrate 18 may also be comprised of machined parts and non-composite materials, such as wood, ceramics, fabrics, and other suitable non-composite materials. The substrate 18 may also be comprised of metals, such as iron, steel, aluminum, and other suitable metals, as well as alloys of iron, nickel, cobalt, and other metals.

After the carrier film 10 is deposited onto the substrate surface 18 with the metal layer 16 exposed and not in contact with the substrate surface 18, a component material 20 is deposited onto the metal layer 16 on the first surface side 14 of the carrier film 10 to form a multilayer product 22. The component material 20 may comprise composite materials, such as thermoplastics, elastomerics, thermosets, or other suitable composite materials. The component material 20 may also comprise non-composite materials, such as wood, ceramics, fabrics, metals, rock, or other suitable non-composite materials. In addition, the component material 20 may be any shape or size and is not limited to specific dimensions. At this stage in the process of this embodiment, the multilayer product 22 comprises the following composition, from uppermost layer to bottom most layer (Figure 5): the component material layer 20, the metal layer 16, the carrier film layer 10, and the substrate layer 18.

The multilayer product 22 is subsequently transferred to a curing apparatus 24 such as the oven 24 for curing of the multilayer product 22 for an effective amount of time and at an effective temperature and at an effective pressure to consolidate the multilayer product 22 and to transfer the metal layer 16 from the carrier film 10 to the component material 20. The parameters of time, temperature, and pressure for curing are determined based on the type of composite or non-composite material selected, as well as the type of curing apparatus 24 selected. The step of curing the multilayer product 22 produces a robust, superior adhesion of the metal 16 to the component material 20.

Most composites have a resin matrix that consolidates during the curing step. The resin matrix acts as the adhesion mechanism for the metal coating 16. As it cures, the resin at the surface of the composite material 20 attaches to and consolidates with the metal layer 16, and the metal layer 16 is transferred from the carrier film 10 to the composite part 20. For advanced composites, such as thermoplastics and thermosets, the curing apparatus 24 is typically an oven, an autoclave, or a press machine, and the multilayer or monolithic composite product 22 formed in the process is typically cured by heating the multilayer product 22 to a temperature in the range of from about 70°F to about 700°F, and at a pressure in the range of zero psi (pounds per square inch) to about 300 psi. The typical time for curing of composites depends on the dimensions of the component part 20 and the type of resin matrix present. For example, for standard spacecraft parts, the typical curing time is from about 3 hours to about 5 hours. However, with certain specialty resins, such as polyimide resins, curing of the composite may take up to several days.

For resin transfer mold (RTM) composites, the curing step may be carried out with a resin transfer mold apparatus (not shown). With a conventional resin transfer mold apparatus, the component part is typically placed in a closed cavity mold and resin is pumped into one side of the mold and disposed into the other side of the mold. Once the mold is full of resin, the mold is put into an oven and baked. In the process of the present invention, the mold is initially lined with the metallized carrier film and then the resin is injected. The mold is then cured in the oven so that the metal from the carrier film is consolidated with and transferred to the surface of the composite material.

In the case of thermoplastics, such as polyetherimide (PEI), the multilayer or monolithic product 22, is cured by heating the multilayer or monolithic product 22 to the melting point of the thermoplastic, so that the metallic coating 16 is sufficiently consolidated and transferred from the carrier film 10 to the thermoplastic material. The average process time for thermoplastics may be in the range of about 20 seconds to about 10 minutes.

In the case of thermosets, such as polycyanate resin and graphite fabric, the multilayer product 22 is cured by heating the multilayer product 22 until the matrix of the thermoset is staged, i.e., when a thermoset is heated, the resin matrix initially converts to a liquid stage, then a coagulated stage, and then a fully converted and crosslinked stage. The curing temperature for heating of thermosets is typically in the range of from about 150°F to about 650° F. Thermosets do not have a melting point per se, but the resin matrix is reduced in viscosity and the molecules are crosslinked. The average curing time for thermosets may be in the range of about 30 seconds to about 9 hours.

Another curing means used for composite components, as well as non-composite components, includes a vacuum bag. For example, a curing means 24 for a non-composite material, such as wood, may comprise a vacuum bag held at a temperature of about 70°F and at a pressure of less than about 15 psi. The wood is deposited onto an adhesive layer (not shown) that has been applied to the metal layer 16 on the carrier film, and the wood is disposed within a vacuum bag apparatus held at about 70°F. The vacuum bag is evacuated to create a pressure against the wood of less than about 15 psi, and the vacuum bag is evacuated for an effective amount of time until the metal layer 16 is transferred from the carrier film 10 to the wood via the additional adhesive layers.

Another curing means for composite and non-composite materials may comprise a vacuum bag held at an elevated temperature of up to 650°F and at a pressure of up to about 300 psi. Another curing means may comprise an autoclave held at a high temperature, such as about 350°F, and held at a high pressure, such as about 100 psi. For purposes of this application, the term "autoclave" means a metal piece of equipment, sometimes lined with glass or inert plastic, used for reactions between gases under pressure and liquid or solid reactants. Additional curing means may include a press cure device which is a machine that uses pressing plates; a hot isostatic pressure (HIP) device which uses heat, pressure and a vacuum; and, a static isostatic pressure (SIP) device which uses pressure and a vacuum.

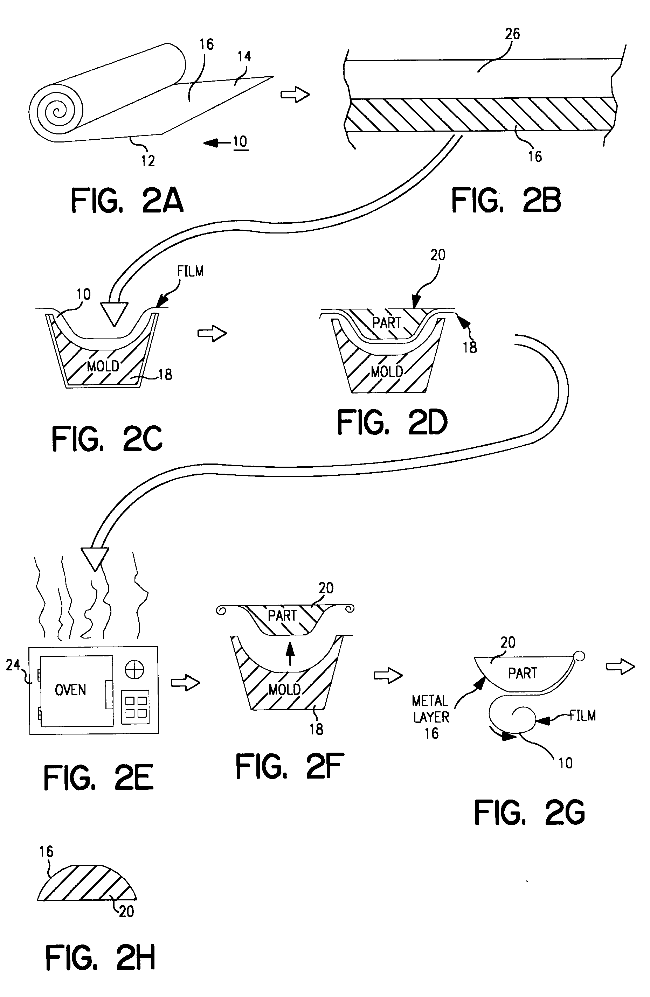

In the curing of component parts 20 comprised of non-composite materials, such as wood, ceramics, fabrics, rock, or other non-composite materials, the process of the present invention (Figure 2) includes the additional step of applying or substantially applying an effective amount of an adhesive layer 26 to the metallized first surface side 14 of the carrier film, after the carrier film 10 is coated with a metal layer 16. An adhesive layer 26 is used because the non-composite material does not have a resin matrix on its surface to allow for the transfer of the metal layer 16 from the carrier film 10 to the surface of the non-composite material. With the application of an effective amount of adhesive to the metallized carrier film, the adhesive 26 provides a binder that allows for the transfer of the metal 16 to the non-composite material 20. The adhesive layer 26 may be comprised of materials such as film adhesives, laminating adhesives, liquid resin adhesives, or other suitable paints or adhesives. The adhesive layer 26 is applied to the carrier film 10 by brushing the adhesive onto the carrier film, laminating the adhesive onto the carrier film, dipping the carrier film in the adhesive, rolling the adhesive onto the carrier film, or applying the adhesive via a special machine.

Once the multilayer product 22 is cured in the selected curing apparatus for an effective amount of time and at an effective temperature and at an effective pressure, in order to consolidate the multilayer product 22 and to transfer the metal layer 16 from the carrier film 10 onto the component part 20, the multilayer product 22 is removed from the curing apparatus. The carrier film 10 is now in the form of a strippable or removable film that may be removed from the component part 20 or left on the component part 20. The cured carrier film may be removed or stripped from the component part immediately, for later use or testing, or when desired. In the alternative, the cured carrier film 10 may be left on the component part in order to provide a protective layer to the component part 20, so as to environmentally protect the component part against elements such as water or heat, or to protect the component part against debris in space, or to protect the component part during handling and transport. In general, if the carrier film does not affect the form, fit, or function of the component part, it may be left on indefinitely.

The process of the present invention may further include the step (not shown) of initially embossing a pattern onto the carrier film or the step (not shown) of initially etching a pattern into the carrier film before the step of coating the first surface side 14 of the carrier film with a metal coating. Performance enhancing surface textures can be embossed directly onto or etched directly into the carrier film to provide variable specularity and cosmetic enhancement without distortion. Preferably, the patterning comprises optical diffraction gradients, such as holographic images. Once the carrier film 10 is embossed or etched with a pattern, such as a holographic pattern, the carrier film may be metallized in an apparatus, such as a dedicated roll coater which is a commercial machine that vapor deposits metal onto large rolls of polymeric film. The carrier film may also metallized via sputter deposition or conventional vapor deposition processes. The preferred holographic films used in the present invention are commercial films comprised of polyethylene-terephthalate (PET) or nylon, are typically from about 0.002 inches to about 0.0005 inches thick, and are typically from about 24 inches to about 39 inches wide. The preferred holographic films used in the present invention are manufactured by Spectratek Inc., of Los Angeles, California. The utilization of holographic films in the present process results in a replication of the holographic pattern diffraction gradient onto the resin-rich "tool side" (surface side) of a composite component or results in a replication of the holographic pattern diffraction gradient onto the laminated adhesive surface of a non-composite component. When the carrier film is removed from the composite or non-composite component, the result is a composite or non-composite component that not only has a metallic surface but is embossed with a holographic image.

Besides the decorative aspects that the use of the holographic film provides to the present invention, there are also functional aspects that the holographic film provides. After processing, the metallized holographic surface on the component part reflects light at varying angles to prevent the underlying surface of the component part from heating up in direct sunlight beyond a certain temperature.

In general, known holographic films do not provide as great an enhanced or distinct appearance when viewed prior to the process, because the metal is on the inside layer of the holographic film. When the holographic films are used in the process of the present invention, the reflectivity and optical harmonics of the holographic film are enhanced, without distortion, because the metal that was formerly on the inside layer of the film is transferred in such a way that it is now on the outside layer of the component that was transfer metallized. The present process allows the diffraction gradient of the holographic pattern to be viewed directly, and this enhances the appearance of the holographic image. Moreover, the use of holographic films in the process of the present invention results in the replication of most or all of the diffraction gradient spectra to the processed component material. The process allows the replication of holographic pieces of about 0.5 microns in height, or less, and about 0.75 microns in width, or less, from the holographic carrier film to the component material. The replication of such small-sized holographic pieces increases the fine detail of the overall holographic image that is transferred from the holographic carrier film to the component material. The enhanced and detailed appearance of the transferred holographic film is advantageous to the present process, and allows the present process to be used with numerous applications involving such items as toys, novelty goods, fabrics, household items, sporting goods, and other applications.

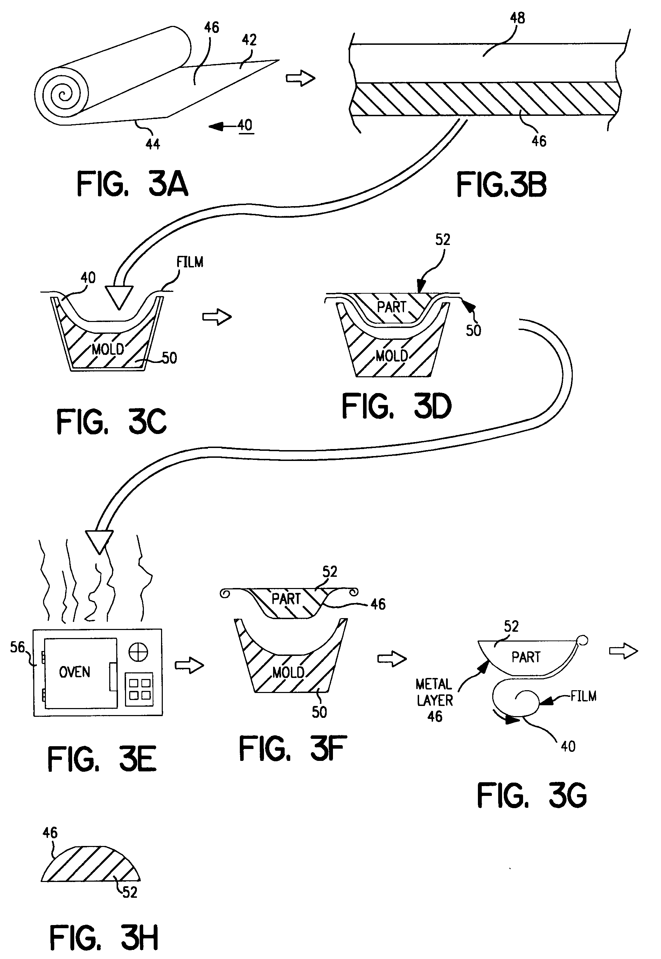

In a second embodiment of the present invention, a process (Figure 3) for film transfer metallization is provided for non-composite components. This embodiment comprises the initial step of providing a carrier film 40 having a first surface side 42 and a second surface side 44 , coating the first surface side 42 of the carrier film with a metal layer 46, and further includes the step of coating the metallized first surface side of the carrier film with an adhesive layer 48. The adhesive layer 48 may comprise materials, such as film adhesives, laminating adhesives, liquid resin adhesives, or other suitable adhesives. An effective amount of adhesive is used with the non-composite component material to provide attachment of the metal to the non-composite, because the non-composite typically does not have a resinous surface that allows for attachment of the metal coating layer to the non-composite. This embodiment may be considered to be a secondary process which uses a layer of adhesive 48 for secondarily bonding the metallic layer 46. The metallized, adhesive coated carrier film 40 is then deposited onto a substrate surface 50 in a manner such that the second surface side 42 of the carrier film 40 is in contact with the substrate surface 50, and the adhesive layer 48 on the metallized first surface side 42 of the carrier film 40 is exposed and not in contact with the substrate surface 50. The substrate 50 may be comprised of materials such as composites or non-composites The carrier film 40 may be comprised of a polymeric material, such as polyethylene-terephthalate (PET), fluorinated ethylenepropylene (FEP), polytetrafluoroethylene (PTFE), perfluoroalkoxy (PFA), vinylidene fluoride (PVF₂), polyvinyl fluoride (PVF), ethylene-chlorotrifluororethylene copolymer (E-CTFE), or nylon. However, other suitable polymeric materials may also be used. A non-composite component material 52 is then deposited onto the adhesive layer 48 on the first surface side of the carrier film to form a multilayer product 54. At this stage in the process of this embodiment, the multilayer product 54 (Figure 6) comprises the following composition, from uppermost layer to bottommost layer: the non-composite material layer 52, the adhesive layer 48, the metal layer 46, the carrier film layer 40, and the substrate layer 50. The multilayer product is cured using one of the selected curing processes for non-composites as discussed above. The multilayer product 54 is cured in a selected curing apparatus 56 for an effective amount of time and at an effective temperature and at an effective pressure to consolidate the multilayer product 54 and to transfer the metal layer 48 from the carrier film 40 to the non-composite component 52.

Once the carrier film is sufficiently consolidated and the metal is transferred to the non-composite component, the cured multilayer product 54 is removed from the curing apparatus 56. The process of this aspect of the invention may further include the step of removing or stripping the cured carrier film 40 from the cured non-composite component portion of the cured multilayer product 54. The process of this aspect of the invention may further include the initial step of embossing patterns onto the carrier film or the initial step of etching patterns into the carrier film before the step of coating the first surface side of the carrier film with the metal layer.

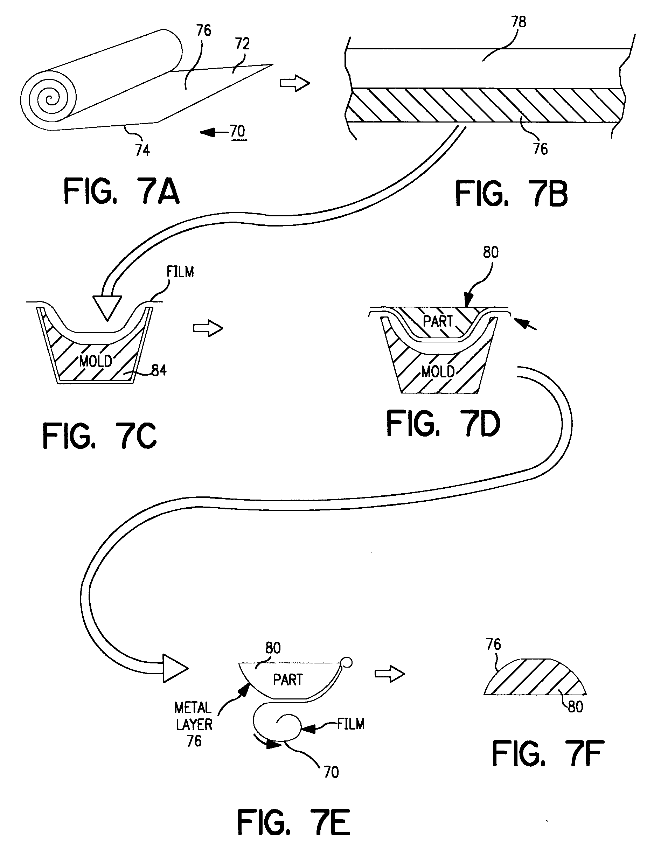

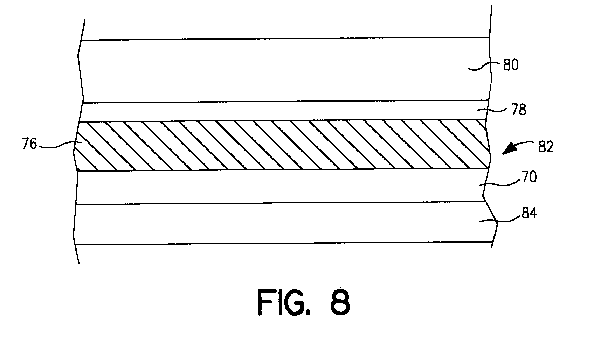

According to yet another embodiment of the present invention, a process for film transfer metallization (Figure 7) is provided which involves the use of a pressure sensitive adhesive material. This embodiment comprises the step of providing a carrier film 70 having a first surface side 72 and a second surface side 74, coating the first surface side 72 of the carrier film with a metal layer 76, and further including the step of coating the metallized first surface side 72 of the carrier film with an effective amount of a pressure sensitive adhesive layer 78. The pressure sensitive adhesive 78 may be comprised of acrylic, silicone, or other suitable pressure sensitive adhesive materials. A component material 80 is then deposited onto the adhesive coated, metallized first surface side of the carrier film 70 for an effective amount of time and with an effective amount of pressure. At this stage in the process of this embodiment, the resulting product 82 (Figure 8) comprises the following composition, from uppermost layer to bottommost layer: the component material layer 80, the pressure sensitive adhesive layer 78, the metal layer 76, the carrier film layer 70, and the substrate layer 84. For purposes of this application, an effective amount of pressure is that amount of pressure which causes intimate contact between the pressure sensitive adhesive 78 and the component material 80, so as to effectively transfer the metal layer 76 from the carrier film 70 to the component material 80. There is no curing step with this embodiment of the invention. Rather, only sufficient pressure needs to be applied to the coated carrier film 70 and to the component material layer 80, so that the metal layer 76 is effectively transferred from the carrier film 70 to the component material 80. The process of this embodiment of the invention may further include the step of stripping the carrier film 70 from the component material 80 which is now coated with the transferred metal layer 76. The carrier film 70 may be removed or stripped from the component part 80 immediately, for later use or testing, or when desired. In the alternative, the cured carrier film may be left on the component part in order to provide a protective layer to the component part, so as to environmentally protect the component part against elements such as water or heat, or to protect the component part against debris in space, or to protect the component part during handling and transport.

This embodiment of the invention may further include (not shown) the initial step of embossing patterns onto the carrier film or the initial step of etching patterns into the carrier film, such as with holographic patterns, before the step of coating the first surface side of the carrier film with the metal layer.

The foregoing discussion discloses and describes merely exemplary embodiments of the present invention. One skilled in the art will readily recognize from such discussion, and from the accompanying drawings and claims, that various changes, modifications and variations can be made therein without departing from the spirit and scope of the invention as define in the claims.

## Claims

1. A process for film transfer metallization comprising the steps of:
providing a carrier film having a first surface side and a second surface side;
coating the first surface side of the carrier film with a metal layer;
depositing the coated carrier film onto a substrate surface,
wherein the second surface side of the carrier film is in contact with the substrate surface,
and wherein the metal layer on the first surface side of the carrier film is not in contact with the substrate surface;
depositing a component material onto the metal layer on the first surface side of the carrier film to form a multilayer product;
curing the multilayer product in a curing apparatus for an effective amount of time and at an effective temperature and at an effective pressure to consolidate the multilayer product and to transfer the metal layer from the carrier film to the component material; and,
removing the cured multilayer product from the curing apparatus.

2. The process of claim 1 further including the step of
removing the cured carrier film from the cured component material of the multilayer product, and/or
further including the step of coating the first surface side of the metallized carrier film with an adhesive layer, after the step of coating the first surface side of the carrier film with the metal layer, and/or
further including the step of embossing patterns onto the carrier film, and/or
further including the step of etching patterns into the carrier film, and/or
wherein the step of providing a carrier film having a first surface side and a second surface side comprises selecting the carrier film from the group consisting of polyethylene-terephthalate, fluorinated ethylenepropylene, polytetrafluoroethylene, perfluoroalkoxy, vinylidene fluoride, polyvinyl fluoride, ethylene-chlorotrifluororethylene copolymer, and nylon, and/or
wherein the step of providing a carrier film having a first surface side and a second surface side comprises selecting the carrier film of a material selected from the group consisting of composites and non-composites, and/or
wherein the step of providing a carrier film having a first surface side and a second surface side comprises selecting the carrier film of a material selected from the group consisting of composites.

3. The process of claim 1 or 2 wherein the step of coating the first surface side of the metallized carrier film with an adhesive layer comprises utilizing for the adhesive layer a material selected from the group consisting of film adhesives, laminating adhesives, and liquid resin adhesives.

4. The process of claim 1 or 2 wherein the step of depositing a component material onto the metal layer on the first surface side of the carrier film the component material comprises depositing a non-composite material.

5. The process of claim 1 further including the step of
removing the cured carrier film from the cured composite material of the multilayer product, and/or
wherein the carrier film comprises a polymeric material selected from the group consisting of polyethylene-terephthalate, fluorinated ethylenepropylene, polytetrafluoroethylene, perfluoroalkoxy, vinylidene fluoride, polyvinyl fluoride, ethylene-chlorotrifluororethylene copolymer, and nylon.

6. A process for film transfer metallization comprising the steps of:
providing a carrier film having a first surface side and a second surface side;
coating the first surface side of the carrier film with a metal layer;
coating the metallized first surface side of the carrier film with an adhesive layer, wherein the adhesive layer comprises a material selected from the group consisting of film adhesives, laminating adhesives, and liquid resin adhesives;
depositing the metallized, adhesive coated carrier film onto a substrate surface, wherein the second surface side of the carrier film is in contact with the substrate surface, and wherein the adhesive layer on the first surface side of the carrier film is not in contact with the substrate surface;
depositing a non-composite material onto the adhesive layer on the first surface side of the carrier film to form a multilayer product;
curing the multilayer product in a curing apparatus for an effective amount of time and at an effective temperature and at an effective pressure to consolidate the multilayer product and to transfer the metal layer from the carrier film to the non-composite material; and,
removing the cured multilayer product from the curing apparatus.

7. The process of claim 6 further including the step of
removing the cured carrier film from the cured non-composite material of the multilayer product, and/or
further including the step of embossing patterns onto the carrier film, and/or
further including the step of etching patterns into the carrier film, and/or
wherein the carrier film comprises a polymeric material selected from the group consisting of polyethylene-terephthalate, fluorinated ethylenepropylene, polytetrafluoroethylene, perfluoroalkoxy, vinylidene fluoride, polyvinyl fluoride, ethylene-chlorotrifluororethylene copolymer, and nylon.

8. A process for film transfer metallization comprising the steps of:
providing a carrier film having a first surface side and a second surface side; coating the first surface side of the carrier film with a metal layer;
applying a pressure sensitive adhesive layer to the metallized first surface side of the carrier film; and,
applying a component material to the pressure sensitive adhesive layer on the metallized first surface side of the carrier film for an effective amount of time and with an effective amount of pressure, so as to transfer the metal layer from the carrier film to the component material.

9. The process of claim 8 further including the step of
stripping the carrier film from the component material, and/or
further including the step of embossing patterns onto the carrier film, and/or
further including the step of etching patterns into the carrier film, and/or
wherein the carrier film comprises a polymeric material selected from the group consisting of polyethylene-terephthalate, fluorinated ethylenepropylene, polytetrafluoroethylene, perfluoroalkoxy, vinylidene fluoride, polyvinyl fluoride, ethylene-chlorotrifluororethylene copolymer, and nylon, and/or
wherein the component material comprises a material selected from the group consisting of composites and non-composites.
